# EUROPEAN PATENT SPECIFICATION

(11) **EP 3 225 606 B1**
(45) Date of publication and mention of the grant of the patent: **16.10.2019**
(21) Application number: 17162434.9
(22) Date of filing: 22.03.2017
(51) Int. Cl.: C04B 28/06

(54) **CONSTRUCTION MATERIALS**
BAUMATERIALIEN
MATÉRIAUX DE CONSTRUCTION

(30) Priority: 01.04.2016 GB 201605614
(43) Date of publication of application: 04.10.2017
(73) Proprietor: Wetherby Stone Products Ltd, Thirsk, Yorkshire YO7 3HE (GB)
(72) Inventor: CHALMERS, Alex, Thirsk, Yorkshire YO7 3HE (GB); OMAKOWSKI, Tomasz, Thirsk, Yorkshire YO7 3HE (GB)
(74) Representative: Watkins, Charlotte Helen

(56) References cited:
- EP-A1- 0 650 942
- EP-A1- 2 947 059
- AU-B2- 493 167
- DE-A1-102008 043 766
- DATABASE WPI Week 201172 Thomson Scientific, London, GB; AN 2011-M48357 XP002771157, & CN 102 173 662 A (BEIJING ORIENTAL YUHONG WATERPROOF TECH) 7 September 2011 (2011-09-07)
- DATABASE WPI Week 201155 Thomson Scientific, London, GB; AN 2011-H32588 XP002771158, & CN 102 060 463 A (SHANDONG HONGYI SCI&TECHNOLOGY CO LTD) 18 May 2011 (2011-05-18)

## Description

### Field of the Invention

Certain embodiments of the present invention relate to construction compositions and materials which have utility in low ambient temperatures. Particularly although not exclusively, embodiments of the invention relate to a cementitious composition for forming a coating e.g. a paint or plaster layer or a floor coating on a surface of a building wall, ceiling or floor. Also included *inter alia* are methods of covering surfaces e.g. walls, ceilings and the like comprising the use of such compositions and materials as well as other subject matter.

### Background to the Invention

Aqueous suspensions comprising hydraulic binders such as for example an aluminous cement come in the form of more or less fluid suspensions. These suspensions can form ready to use solutions to be used in construction e.g. as external render materials, adhesives, paint formulations and the like.

A drawback of existing construction materials such as hydraulic binder based aqueous suspensions is that they cannot be applied satisfactorily at low ambient temperatures. As a result, construction is often delayed or halted during periods of low temperatures e.g. below 5°C.

Typically, Portland cement-based construction materials, if applied to a structure at an ambient temperature of below 5°C, has a long set delay and also may freeze at temperatures below 0°C. Additionally, water-based construction materials, which typically rely on evaporation to set, will not set at ambient temperatures of less than about 5°C. Solvent-based construction materials will eventually set at temperatures of less than about 5°C, however, the time taken for these materials to set is prohibitively long.

CN102173662 discloses a low-temperature super-early strength support grouting material. CN102060463 discloses a concrete anti-freezing agent. EP2947059A1 discloses an exterior insulation mortar. DE102008043766A1 discloses a composition hydraulically setting at low temperatures. EP0650942A1 discloses a hydraulic mortar used in the manufacturing of a composite body. AU7298974 discloses a surface coating composition.

It would therefore be desirable for construction materials such as render materials which can be applied at low ambient temperatures and which meet the necessary regulations for the construction material.

It is an aim of certain embodiments of the present invention to at least partially mitigate the problems associated with the prior art.

It is an aim of certain embodiments of the present invention to provide a construction material which is suitable for application at low ambient temperatures.

It is an aim of certain embodiments of the present invention to provide a construction material which has the requisite performance post-application to meet current regulations for construction materials even when applied and maintained in low ambient temperatures.

### Description of Certain Embodiments of the Invention

Certain embodiments of the present invention relate to building materials and their application to a surface of a structure. Particularly, although not exclusively, certain embodiments of the present invention relate to building materials such as for example aqueous suspensions and/ or dry particulate compositions which are for use as rendering material, paint, adhesives and the like.

In a first aspect of the present invention, there is provided an aqueous suspension according to claim 1.

Aptly, the aqueous suspension may be considered to be a pre-mixed "slurry".

Certain embodiments of the present invention may have utility as a construction material when applied and/or maintained an ambient temperature of 5 ºC or less e.g. 4 ºC, 3 ºC, 2 ºC, 1 ºC, 0 ºC, -1 ºC, -2 ºC, - 3 ºC or lower.

The aqueous suspension may be for use as a render material for example. A render material is aptly applied to an external surface e.g. a building wall. Aptly, the aqueous suspension may be a base coat material or a top coat material or may be used to prepare a base coat material or a top coat material.

The aqueous suspension may be for use as a paint material or to prepare a paint material. The aqueous suspension may be for use as an adhesive material or to prepare an adhesive material. The aqueous suspension may be for example a tiling material e.g. grout or tile adhesive.

The at least one hydraulic binder comprises aluminous cement, calcium sulfoaluminous cement and/or combinations thereof.

Aptly, the hydraulic binder comprises a high aluminium content. For example, the hydraulic binder may comprise at least 60% w/w aluminium or a compound comprising aluminium.

In certain embodiments, the aluminium content of the hydraulic binder is between about 65% to 75% by weight, e.g. from about 68% to about 72% by weight relative to the hydraulic binder total weight.

Aptly, the chemical composition of the hydraulic binder e.g. a calcium sulfoaluminous cement contains the following:
Al₂O₃ (%): >60%, aptly 60-75%;
CaO: > 25%, aptly, 25-50%;
SiO₂: <5%, aptly <4% and more aptly <2%; and
Fe₂O₃: <10%, aptly <5% and more aptly <1%.

In certain embodiments, the hydraulic binder is composed of:
Al₂O₃ (%) in a range of between about 68.7 - 70.5, with a specification limit of > 68.5;
CaO (%) in a range of between about 28.5 - 30.5 with a specification limit of < 31;
SiO₂ (%) in a range of between about 0.2 - 0.6 with a specification limit of < 0.8;
Fe₂O₃ (%) in a range of between about 0.1 - 0.2 with a specification limit of < 0.4;
MgO (%) approximately < 0.5;
TiO₂ (%) approximately < 0.4;
K₂O+Na₂0 (%) approximately < 0.5; and
SO₃ (%) approximately < 0.3.

The values are determined according to EN 196-2: Methods of testing cement - Chemical analysis of cement.

The at least one hydraulic binder can be Ternal® White. Ternal® White is produced and sold by Kerneos SA.

Ternal® White is a calcium aluminate cement in which the reactivity and very white colour are strictly controlled.

The at least one hydraulic binder is provided in a concentration of between 15% and 70% w/w of the total weight of the suspension. For example, the at least one hydraulic binder may be provided in a concentration of between 15% and about 60%, e.g. 15% to about 50%, and optionally between 15% and about 40%.

In certain embodiments, the at least one hydraulic binder is provided in a concentration of between 20% to 40% w/w of the total weight of the suspension.

In certain embodiments, the at least one freeze control agent is selected from mono propylene glycol, glycerol and detoxicated ethylene glycol and combinations thereof. Aptly, the detoxicated ethylene glycol comprises a detoxicating agent. In certain embodiments, the at least one freeze control agent is an ester alcohol or a glycol ether.

The at least one freeze control agent is provided in a concentration of between 1.5% to 5% w/w of the total weight of the suspension. For example, the at least one freeze control agent is provided in a concentration of between about 2% and 5% w/w of the total weight of the suspension.

The at least one stabilising agent is capable of reducing or preventing hydration of the hydraulic binder. The at least one stabilising agent comprises a phosphorus-containing compound selected from metaphosphoric acid, phosphorous acid, phosphoric acid and phosphonic acid. Aptly, the at least one stabilising agent is phosphoric acid. Alternatively or in addition, the at least one stabilising agent comprises boric acid.

In certain embodiments, the at least one stabilising agent is phosphoric acid provided in an aqueous solution in a concentration of between about 50% and about 85% v/v.

In certain embodiments, the at least one stabilising agent is provided in the suspension at a concentration of between about 0.3% to 2% w/w. Aptly, the at least one stabilising agent is provided in the suspension at a concentration of between about 0.5% to 2% w/w of the total weight of the suspension.

In certain embodiments, the aqueous solution is water. In certain embodiments, the aqueous solution is provided in a concentration of between about 7% and about 20% w/w of the total weight of the aqueous suspension, e.g. about 7% and about 15% w/w of the total weight of the suspension. In certain embodiments, the aqueous solution is provided in a concentration of between about 15% and about 20% w/w of the total weight of the aqueous suspension.

The suspension can comprise at least one dispersing agent. Aptly, the at least one dispersing agent is an ammonium salt of an acrylic copolymer in water. Aptly, the at least one dispersing agent is selected from an acrylic homopolymer, sodium hexametaphosphate, naphthalene sulfonate and a phosphate ester.

Other dispersing agents may include for example:
a) an acrylic homopolymer dispersant;
b) a sodium hexametaphosphate dispersant;
c) naphthalene sulfonate dispersant; and
d) phosphate ester-based dispersant.

In certain embodiments, the suspension and/or powder further comprises at least one filler material. Aptly, the at least one filler material is a mineral filler, wherein optionally the mineral filler is selected from a siliceous compound and a carbonate compound. Aptly, the mineral filler is selected from a calcium carbonate, a magnesium carbonate, magnesium silicate, quartz sand, silica sand, crystalline silica, silicon dioxide and combinations thereof.

In certain embodiments, the at least one filler material is a first filler material and wherein the suspension further comprises a second filler material. Aptly, the second filler material is selected from glass e.g. expanded glass beads, expanded perlite and/or magnesium silicate and combinations thereof.

In certain embodiments, the aqueous suspension further comprises a biocidal agent.

In certain embodiments, the aqueous suspension further comprises a component selected from one or more of the following:
i) a fibrous material;
ii) a defoaming agent;
iii) a pigment;
iv) a polymeric binder; and
v) a rheology modifier.

Aptly, the suspension comprises a further binder. In certain embodiments, the further binder comprises an organic polymeric binder. Aptly, the organic polymeric binder comprises a redispersible latex powder.

Redispersible latex powders (RDPs) are organic polymeric powders made by spray drying aqueous latexes. Examples of RDPs which may be suitable for use in embodiments of the present invention include Dow™ Latex Polymer (DLP) 2001, a RDP supplied by The Dow Chemical Company, which is composed of Va/E and Va/VEO and fit for skim coat applications to confer improved tensile adhesion and water resistance. In some skim coat applications of embodiments of this invention, RDPs could be substituted by polyvinyl alcohols.

In certain embodiments, the further binder comprises a dispersion which comprises a low pH stabilised vinyl acetate, VeoVa10® and an acrylate copolymer. VeoVa10® monomer is a vinyl ester of Versatic® acid 10, which is a synthetic saturated monocarboxylic acid with a highly branched structure containing ten carbon atoms. VeoVa10® is available from Hexion Inc.

In certain embodiments, the rheology modifier is selected from one or more of the following:
a) an alkali swellable polyacrylate emulsion (ASE) thickener. An example of a suitable ASE thickener is DeCAL 1000;
b) hydrophobically modified alkali swellable emulsion (HASE) e.g. An example of a suitable HASE thickener is DeCAL 1107. HASE products differ from ASE-products in that, in addition to acid groups distributed throughout the polymer chain, they also contain long-chain hydrophobic groups.
c) liquid dispersion polymer thickener (LDP). An example of a suitable LDP thickener is DeCAL 1200;
d) hydrophobically modified ethylene oxide-urethane block copolymers (HEUR). An example of a suitable HEUR thickener is DeCAL PS167;
e) cellulose ethers; and
f) a gum-based thickener.

Other rheology modifiers which may be suitable for use in certain embodiments of the present invention will be known to those skilled in the art.

In certain embodiments, the defoaming agent is selected from:
a) a water based defoamer;
b) an oil based defoamer;
c) a silicone emulsion defoamer,
d) dimethyl polysiloxane; and
e) a polymer defoamer (EO/PO defoamers)

Suitable defoamers will be known to the person skilled in the art.

In a further aspect of the present invention, there is provided a construction material comprising the aqueous suspension according to the first aspect of the present invention. The construction material may be for example a rendering material, an adhesive material, a paint material, a tiling material e.g. a grouting material and/or a floor covering material.

In certain embodiments, the construction material comprises the aqueous suspension and an activating agent. Aptly, the activating agent catalyses and accelerates the hardening of the aqueous suspension. Aptly, the activating agent comprises at least one lithium salt e.g. lithium carbonate, lithium sulfate, lithium silicate or combinations thereof.

Aptly, the activating agent comprises one or more of the following components:

**Table 1**

| **Chemical Name** | **Function** |
|---|---|
| Water | Solvent |
| Caustic Soda | Different source of alkalinity increase in pH of the Base |
| Caustic Potash | |
| Calcium Hydroxide | |
| Calcined clinker | |
| Lithium Carbonate | Lithium salts accelerate the hardening kinetics of CAC (e.g. Ternal White®) |
| Lithium Sulfate | |
| Lithium Silicate | |
| Lithium Hydroxide | As above |

Aptly, the activating agent is provided in a concentration of between about 1.5 to about 5% w/w of the total weight of the construction material.

In a further aspect of the present invention, there is provided a paint material comprising the aqueous suspension according to the first aspect of the present invention. Aptly, the paint material further comprises an activating agent as described herein.

In a further aspect of the present invention, there is provided a method of coating a structure comprising:
applying the aqueous suspension as described herein or the construction material as described herein to a surface of a structure.

Aptly, the method comprises adding an activating agent to the aqueous suspension prior to applying the aqueous suspension to the surface. Aptly, the mixture of the activating agent and the aqueous suspension is applied to the surface of a structure at an ambient temperature of 5 ºC or less e.g. 4 ºC, 3 ºC, 2 ºC, 1 ºC, 0 ºC, -1 ºC, -2 ºC, - 3 ºC or lower.

The aqueous suspension can be applied by:
a) spraying;
b) trowelling;
c) brushing; and/or
d) by roller.

The aqueous suspension of certain embodiments of the present invention may be stable for extended periods of time. For example, the aqueous solution viscosity does not change significantly during storage and the system does not set. Aptly, the pH value of the suspension does not materially alter during storage.

In a yet further aspect of the present invention, there is provided use of an aqueous suspension as described herein in a construction material, wherein said construction material is for coating a structure.

Aptly, the aqueous suspension may comprise the following components:

**Table 2**

| **Component** | **Function** | **Basecoat render formulation range (w/w)** |
|---|---|---|
| Water | Solvent | 7-15% |
| Calcium Aluminate Cement White | Primary hydraulic binder | 15-40% |
| Phosphoric Acid (75-85%) | low pH stabilizer | 0.3-2% |
| Mono Propylene Glycol | Freeze control agent | 1.5-5% |
| low pH stabilize vinyl acetate/VeoVa10/acrylate copolymer dispersion. | Secondary binder/Flexible additive | 0-15% |
| Sodium Hexa Meta Phosphate | Softening agent for hard water | 0-2% |
| Ammonium salt of an acrylic copolymer in water | Dispersing agent | 0-0.5% |
| Blends of non-ionic surfactants and hydrophobes in a highly refined mineral oil | Defoaming agent | 0.1-0.5% |
| Cellulose fibres | Fibre reinforcement/ anti-cracking additive | 0-1% |
| Biocidal product for industrial use | In-can preservative | 0-1% |
| Biocidal product for industrial use | Coating preservative | 0-1% |
| Reactive siloxanes/silanes mixture | Hydrophobic agent - water resistance improving additive | 0-2% |
| Titanium Dioxide | White Pigment | - |
| Mixture of calcium and magnesium carbonates | Mineral fillers | 0-30% |
| Talc/Magnesium Silicate | Filler - improve physical properties, which include wet scrub resistance, optical properties, weathering protection | |
| Quartz sand; silica sand; crystalline silica; silicon dioxide | Mineral fillers | 0-60% |
| Expanded glass | Light weight filler | 0-30% |
| Methylcellulose Derivatives/Modified methylhydroxyethylcellulose | Rheology modifier | |
| | | 0-1% |
| Hydroxythylcellulose Derivatives | Rheology modifier | |
| synthetic alkali polyacrylate thickeners | Thixotropic agent/Rheology modifier | 0-2% |
| Powder based on a high-molecular weight synthetic copolymer | Rheology modifier | 0-0.3% |

The aqueous suspension can be used to provide a topcoat render. material. Aptly, the aqueous suspension comprises one or more of the components listed in Table 3:

**Table 3**

| **Component** | **Function** | **Topcoat render formulation range (w/w)** |
|---|---|---|
| Water | Solvent | 7-15% |
| Calcium Aluminate Cement White | Primary hydraulic binder | 15-40% |
| Phosphoric Acid (75-85%) | low pH stabilizer | 0.3-2% |
| Mono Propylene Glycol | Freeze control agent | 1.5-5% |
| low pH stabilize vinyl acetate/VeoVa10/acrylate copolymer dispersion. | Secondary binder/Flexible additive | 0-15% |
| Sodium Hexa Meta Phosphate | Softening agent for hard water | 0-2% |
| Ammonium salt of an acrylic copolymer in water | Dispersing agent | 0-0.5% |
| Blends of non-ionic surfactants and hydrophobes in a highly refined mineral oil | Defoaming agent | 0.1-0.5% |
| Cellulose fibres | Fibre reinforcement/anti-cracking additive | 0-1% |
| Biocidal product for industrial use | In-can preservative | 0-1% |
| Biocidal product for industrial use | Coating preservative | 0-1% |
| Reactive siloxanes/silanes mixture | Hydrophobic agent - water resistance improving additive | 0-2% |
| Titanium Dioxide | White Pigment | 0-5% |
| Mixture of calcium and magnesium carbonates | Mineral fillers | 0-20% |
| | | |
| | | 0-20% |
| | | 0-60% |
| | | |
| | | |
| Talc/Magnesium Silicate | Filler - improve physical properties, which include wet scrub resistance, optical properties, weathering protection | |
| Quartz sand; silica sand; crystalline silica; silicon dioxide | Mineral fillers | |
| Expanded glass | Light weight filler | 0-30% |
| Methylcellulose Derivatives/Modified methylhydroxyethylcellulose | Rheology modifier | 0-1% |
| | | 0-1% |
| Hydroxythylcellulose Derivatives | Rheology modifier | |
| synthetic alkali polyacrylate thickeners | Thixotropic agent/Rheology modifier | 0-2% |
| Powder based on a high-molecular weight synthetic copolymer | Rheology modifier | 0-0.3% |

Aptly, the aqueous suspension is for use as a paint material. Aptly, the aqueous suspension comprises the components of the following Table:

**Table 4**

| **Component** | **Function** | **Paint formulation range** |
|---|---|---|
| Water | Solvent | 10-35% |
| Calcium Aluminate Cement White | Primary hydraulic binder | 20-40% |
| Phosphoric Acid (75-85%) | low pH stabilizer | 0.5-2% |
| Mono Propylene Glycol | Freeze control agent | 1.5-5% |
| low pH stabilize vinyl acetate/VeoVa10/acrylate copolymer dispersion. | Secondary binder/Flexible additive | 0-20% |
| Sodium Hexa Meta Phosphate | Softening agent for hard water | 0-2% |
| Ammonium salt of an acrylic copolymer in water | Dispersing agent | 0-0.5% |
| Blends of non-ionic surfactants and hydrophobes in a highly refined mineral oil | Defoaming agent | 0.1-0.5% |
| Cellulose fibres | Fibre reinforcement/anti-cracking additive | 0-1% |
| Biocidal product for industrial use | In-can preservative | 0-1% |
| Biocidal product for industrial use | Coating preservative | 0-1% |
| Reactive siloxanes/silanes mixture | Hydrophobic agent - water resistance improving additive | 0-2% |
| Titanium Dioxide | White Pigment | 0-5% |
| Mixture of calcium and magnesium carbonates | Mineral fillers | 0-20% |
| | | 0-20% |
| | | 0-20% |
| | | 0-60% |
| | | |
| | | 0-40% |
| Talc/ Magnesium Silicate | Filler - improve physical properties, which include wet scrub resistance, optical properties, weathering protection | 0-15% |
| Quartz sand; silica sand; crystalline silica; silicon dioxide | Mineral fillers | |
| Expanded glass | Light weight filler | 0-30% |
| Methylcellulose Derivatives/Modified methylhydroxyethylcellulose | Rheology modifier | 0-1% |
| | | 0-1% |
| Hydroxythylcellulose Derivatives | Rheology modifier | 0-1% |
| synthetic alkali polyacrylate thickeners | Thixotropic agent/Rheology modifier | 0-2% |
| Powder based on a high-molecular weight synthetic copolymer | Rheology modifier | 0-0.3% |

### Examples

Tests were carried out on a composition according to certain embodiments based according to an ETAG 004: 2013 "*Guideline for European Technical Approval of External Thermal Insulation Composite systems with rendering*". A base coat composition and a top coat composition were tested.

In order to determine the composition's utility in low ambient temperatures, the composition was applied to a surface at around 0.5°C and allowed to dry. The surface was placed in a sealed testing unit.

The applied composition was maintained for 28 days. The ambient temperature in the sealed testing unit was maintained at approximately 2 °C for 16h and -5°C for 8h per 24 hour period. At the end of the 28 days, a complete ETAG 004 hydrothermal test was carried out between -20 and +70° C.

### Clause: 5.1.3.1 of the ETAG 004 test relates to Water absorption:

In order to pass the test, absorption after 24 hours (kg·m⁻²) must not be more than 0.5 kg·m⁻²).

Result: The composition had a water adsorption of: 0.27 kg·m⁻². The composition thus passed.

### Clause: 5.1.4.1.1 of the ETAG 004 test relates to Bond strength between basecoat and insulation products:

The test measures adhesive strength [N/mm2] and mode of failure (FP - fracture pattern A, B or C). To pass, the composition has to have a minimum 0.08 N/mm2 adhesive strength.

Result: The composition showed an adhesive strength of 0.096 N/mm2 and illustrated a fracture pattern C - Fracture in the substrate material. The composition passed this section of the test.

### Clause: 6.1.3.2.1 of the ETAG 004 test relates to Hygrothermal performance

The performance requirements from large scale hygrothermal cyclic testing are:
- for either the reinforced base coat (if a part without finishing coat is required) or the ETICS, the following defects shall neither occur during, nor at the end of, the test programme:
- blistering or peeling of any finishing coat;
- failure or cracking associated with joints between insulation product boards or profiles fitted with ETICS;
- detachment of the render coat; and
- cracking allowing water penetration to the insulating layer (normally ≤ 0,2 mm)

None of the defects occurred with the composition and therefore all aspects of the test were passed satisfactorily. Thus, the tests indicated that the composition of certain embodiments can be applied at a low ambient temperature, and subsequently maintained for an extended period of time at a low ambient temperature and still meet the requirements of European standards for building materials.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents.

## Claims

1. An aqueous suspension comprising:
a) at least one hydraulic binder in a concentration of between 15% to 70% w/w of the total weight of the aqueous suspension;
b) at least one freeze control agent in a concentration of between 1.5% to 5% w/w of the total weight of the aqueous suspension;
c) an aqueous solution; and
d) a stabilising agent in a concentration of between 0.3% to 2% w/w of the total weight of the aqueous suspension wherein the at least one stabilising agent is capable of reducing or preventing hydration of the hydraulic binder and wherein the at least one stabilising agent is selected from boric acid and a phosphorus-containing compound selected from metaphosphoric acid, phosphorous acid, phosphoric acid and phosphonic acid.

2. The aqueous suspension according to claim 1, wherein the aqueous solution is in a concentration of between 7% and 20% w/w of the total weight of the aqueous suspension.

3. The aqueous suspension according to claim 1 or claim 2, wherein the hydraulic binder comprises aluminium or an aluminium-containing compound in a concentration of at least 60% w/w.

4. The aqueous suspension according to any preceding claim, wherein the at least one hydraulic binder is provided in a concentration of between 15% and 60%, e.g. 15% to 50%, and optionally between 15% and 40% w/w of the total weight of the suspension.

5. The aqueous suspension according to claim 4, wherein the at least one hydraulic binder is provided in a concentration of between 20% to 40% w/w of the total weight of the aqueous suspension.

6. The aqueous suspension according to any preceding claim, wherein the at least one freeze control agent is selected from mono propylene glycol, glycerol and detoxicated ethylene glycol and combinations thereof.

7. The aqueous suspension according to claim 6, wherein the detoxicated ethylene glycol comprises a detoxicating agent and further optionally wherein the at least one freeze control agent is provided in a concentration of between 1.5% to 10% w/w of the total weight of the suspension e.g. between 2% and 5% w/w of the total weight of the suspension.

8. The aqueous suspension according to any preceding claim, wherein the at least one stabilising agent is phosphoric acid, wherein optionally the at least one stabilising agent is phosphoric acid provided in an aqueous solution in a concentration of between 50% and 85% v/v.

9. The aqueous suspension according to any preceding claim, wherein the at least one stabilising agent is provided in the aqueous suspension at a concentration of 0.5% to 2% w/w of the total weight of the aqueous suspension.

10. The aqueous suspension according to any preceding claim, which further comprises at least one dispersing agent, wherein the at least one dispersing agent is an ammonium salt of an acrylic copolymer in water and further optionally the at least one dispersing agent is selected from an acrylic homopolymer, sodium hexametaphosphate, naphthalene sulfonate and a phosphate ester.

11. The aqueous suspension according to any preceding claim, which further comprises a component selected from one or more of the following:
i) at least one filler material;
ii) a biocidal agent;
ii) a fibrous material;
iii) a defoaming agent;
iv) a pigment;
vi) an adhesive agent;
vii) a further binder, which is optionally an organic polymer binder; and
viii) a rheology modifier.

12. The aqueous suspension according to claim 11, which comprises a further binder, said further binder comprising an organic polymer.

13. The aqueous suspension according to claim 12, wherein the organic polymer is a copolymer comprising a low pH stabilised vinyl acetate, a vinyl ester of a synthetic saturated monocarboxylic acid comprising ten carbon atoms and an acrylate copolymer.

14. A construction material or a paint material comprising the aqueous suspension according to any preceding claim.

15. The construction material or paint material according to claim 14, which further comprises an activating agent, wherein optionally the activating agent comprises one or more of the following components:
| |
|---|
| Water |
| Caustic Soda |
| Caustic Potash |
| Calcium Hydroxide |
| Calcined clinker |
| Lithium Carbonate |
| Lithium Sulfate |
| Lithium Silicate |
| Lithium Hydroxide |

16. A method of coating a structure comprising:
applying the aqueous suspension according to any of claims 1 to 13 or the construction material or paint material according to claim 14 or claim 15 to a surface of a structure, wherein the method optionally comprises adding an activating agent to the aqueous suspension prior to applying the aqueous suspension to the surface, and further optionally wherein the aqueous suspension is applied to the surface of a structure at an ambient temperature of 5 ºC or less.

## Patentansprüche

1. Wässrige Suspension, umfassend:
a) zumindest einen hydraulischen Binder in einer Konzentration von zwischen 15 bis 70 Gew.-% des Gesamtgewichts der wässrigen Suspension;
b) zumindest ein Freeze-Kontrollmittel in einer Konzentration von zwischen 1,5 bis 5 Gew.-% des Gesamtgewichts der wässrigen Suspension;
c) eine wässrige Lösung; und
d) ein Stabilisiermittel in einer Konzentration von zwischen 0,3 bis 2 Gew.-% des Gesamtgewichts der wässrigen Suspension, wobei das zumindest eine Stabilisiermittel fähig ist, Hydration des hydraulischen Binders zu reduzieren oder zu verhindern und wobei das zumindest eine Stabilisiermittel aus Borsäure und einer phosphorhaltigen Verbindung selektiert wurde, die aus Metaphosphorsäure, Phosphorigsäure, Phosphorsäure und Phosphonsäure selektiert wurde.

2. Wässrige Suspension nach Anspruch 1, wobei die wässrige Lösung in einer Konzentration von zwischen 7 und 20 Gew.-% des Gesamtgewichts der wässrigen Suspension ist.

3. Wässrige Suspension nach Anspruch 1 oder Anspruch 2, wobei der hydraulische Binder Aluminium oder eine aluminiumhaltige Verbindung in einer Konzentration von zumindest 60 Gew.-% umfasst.

4. Wässrige Suspension nach einem vorhergehenden Anspruch, wobei zumindest ein hydraulischer Binder in einer Konzentration von zwischen 15 und 60 Gew.-%, z. B. 15 bis 50 Gew.-% und optional zwischen 15 und 40 Gew.-% des Gesamtgewichts der Suspension bereitgestellt ist.

5. Wässrige Suspension nach Anspruch 4, wobei der zumindest eine hydraulische Binder in einer Konzentration von zwischen 20 bis 40 Gew.-% des Gesamtgewichts der wässrigen Suspension bereitgestellt ist.

6. Wässrige Suspension nach einem vorhergehenden Anspruch, wobei das zumindest eine "Freeze" Kontrollmittel aus Monopropylenglykol, Glycerol und entgiftetem Ethylenglykol und Kombinationen davon selektiert ist.

7. Wässrige Suspension nach Anspruch 6, wobei das entgiftete Ethylenglykol ein Entgiftungsmittel umfasst und ferner optional, wobei das zumindest eine "Freeze" Kontrollmittel in einer Konzentration von zwischen 1,5 bis 10 Gew.-% des Gesamtgewichts der Suspension z. B. zwischen 2 und 5 Gew.-% des Gesamtgewichts der Suspension bereitgestellt ist.

8. Wässrige Suspension nach einem vorhergehenden Anspruch, wobei das zumindest eine Stabilisiermittel Phosphorsäure ist, wobei optional, das zumindest eine Stabilisiermittel Phosphorsäure ist, die in einer wässrigen Lösung in einer Konzentration von zwischen 50% und 85% v/v bereitgestellt ist.

9. Wässrige Suspension nach einem vorhergehenden Anspruch, wobei das zumindest eine Stabilisiermittel in der wässrigen Suspension in einer Konzentration von 0,5 bis 2 Gew.-% des Gesamtgewichts der wässrigen Suspension bereitgestellt ist.

10. Wässrige Suspension nach einem vorhergehenden Anspruch, die ferner zumindest ein Dispergiermittel umfasst, wobei das zumindest eine Dispergiermittel ein Ammoniumsalz von einem Acrylcopolymer in Wasser ist und ferner optional das zumindest eine Dispergiermittel aus einem Acrylhomopolymer, Natriumhexametaphosphat, Naphthalinsulfonat und einem Phosphatester selektiert ist.

11. Wässrige Suspension nach einem vorhergehenden Anspruch, die ferner eine Komponente umfasst, die aus einem oder mehreren der Folgenden selektiert ist:
i) zumindest einem Füllmaterial;
ii) einem bioziden Mittel;
ii) einem Fasermaterial;
iii) einem Entschäumungsmittel;
iv) einem Pigment;
vi) einem Haftmittel;
vii) einem weiteren Binder, der optional ein organischer Polymerbinder ist; und
viii) einem Rheologie-Modifikationsmittel.

12. Wässrige Suspension nach Anspruch 11, die einen weiteren Binder umfasst, wobei der weitere Binder ein organisches Polymer umfasst.

13. Wässrige Suspension nach Anspruch 12, wobei das organische Polymer ein Copolymer ist, das ein stabilisiertes Vinylacetat geringen pH-Werts, einen Vinylester einer synthetisch saturierten Monocarboxylsäure umfasst, die zehn Kohlenstoffatome und ein Acrylatcopolymer umfasst.

14. Ein Konstruktionsmaterial oder ein Farbmaterial, das die wässrige Suspension nach einem vorhergehenden Anspruch umfasst.

15. Konstruktionsmaterial oder Farbmaterial nach Anspruch 14, welches ferner ein Aktivierungsmittel umfasst, wobei das Aktivierungsmittel optional eine oder mehrere der folgenden Komponenten umfasst:
| |
|---|
| Wasser |
| Ätznatron |
| Ätzkali |
| Calciumhydroxid |
| Kalzinierten Klinker |
| Lithiumcarbonat |
| Lithiumsulfat |
| Lithiumsilikat |
| Lithiumhydroxid |

16. Verfahren zur Beschichtung einer Struktur, umfassend:
Anwenden der wässrigen Suspension nach einem der Ansprüche 1 bis 13 oder des Konstruktionsmaterials oder Farbmaterials nach Anspruch 14 oder Anspruch 15 auf eine Oberfläche einer Struktur, wobei das Verfahren optional das Hinzufügen eines Aktivierungsmittels zur wässrigen Suspension vor dem Auftragen der wässrigen Suspension auf die Oberfläche umfasst, und ferner optional, wobei die wässrige Suspension bei einer Umgebungstemperatur von 5 °C oder weniger auf die Oberfläche aufgetragen wird.

## Revendications

1. Suspension aqueuse comprenant :
a) au moins un liant hydraulique à une concentration de 15 % à 70 % p/p du poids total de la suspension aqueuse ;
b) au moins un agent de contrôle du gel à une concentration de 1,5 % à 5 % p/p du poids total de la suspension aqueuse ;
c) une solution aqueuse ; et
d) un agent stabilisant à une concentration de 0,3% à 2% p/p du poids total de la suspension aqueuse, le ou les agents stabilisants étant capables de réduire ou prévenir l'hydratation du liant hydraulique, et le ou les agents stabilisants étant sélectionnés entre l'acide borique et un composé contenant du phosphore sélectionné entre l'acide métaphosphorique, l'acide phosphoreux, l'acide phosphorique et l'acide phosphonique.

2. Suspension aqueuse selon la revendication 1, dans laquelle la solution aqueuse est à une concentration de 7 % à 20 % p/p du poids total de la suspension aqueuse.

3. Suspension aqueuse selon la revendication 1 ou 2, dans laquelle le liant hydraulique comprend l'aluminium ou un composé contenant de l'aluminium à une concentration d'au moins 60 % p/p.

4. Suspension aqueuse selon l'une quelconque des revendications précédentes, dans laquelle le ou les liants hydrauliques sont fournis à une concentration d'environ 15% à 60%, par ex. 15% à 50%, et optionnellement entre 15% et 40% p/p du poids total de la suspension.

5. Suspension aqueuse selon la revendication 4, dans laquelle le ou les liants hydrauliques sont fournis à une concentration de 20 % à 40 % p/p du poids total de la suspension aqueuse.

6. Suspension aqueuse selon l'une quelconque des revendications précédentes, dans laquelle le ou les agents de contrôle du gel sont sélectionnés entre le propylène-glycol, le glycérol et l'éthylène-glycol détoxiqué et des combinaisons de ceux-ci.

7. Suspension aqueuse selon la revendication 6, dans laquelle l'éthylène-glycol détoxiqué comprend un agent détoxiquant et en outre, optionnellement, dans laquelle le ou les agents de contrôle du gel sont fournis à une concentration de 1,5% à 10% p/p du poids total de la suspension, par ex. entre 2% et 5% p/p du poids total de la suspension.

8. Suspension aqueuse selon l'une quelconque des revendications précédentes, dans laquelle le ou les agents stabilisants sont l'acide phosphorique, dans laquelle optionnellement le ou les agents stabilisants sont l'acide phosphorique fourni dans une solution aqueuse à une concentration de 50 % à 85 % v/v.

9. Suspension aqueuse selon l'une quelconque des revendications précédentes, dans laquelle le ou les agents stabilisants sont fournis dans la suspension aqueuse à une concentration de 0,5 % à 2 % p/p du poids total de la suspension aqueuse.

10. Suspension aqueuse selon l'une quelconque des revendications précédentes, qui comprend en outre au moins un agent dispersant, le ou les agents dispersants étant un sel d'ammonium d'un copolymère acrylique dans l'eau et en outre, optionnellement, le ou les agents dispersants sont sélectionnés entre un homopolymère acrylique, l'hexamétaphosphate de sodium, le sulfonate de naphtalène et un ester de phosphate.

11. Suspension aqueuse selon l'une quelconque des revendications précédentes, qui comprend en outre un composant sélectionné entre un ou plusieurs des suivants :
i) au moins un matériau de charge ;
ii) un agent biocide ;
ii) un matériau fibreux ;
iii) un agent antimousse ;
iv) un pigment ;
vi) un agent adhésif ;
vii) un autre liant, qui est optionnellement un liant polymère organique ; et
viii) un modificateur de rhéologie.

12. Suspension aqueuse selon la revendication 11, qui comprend un autre liant, ledit autre liant comprenant un polymère organique.

13. Suspension aqueuse selon la revendication 12, dans laquelle le polymère organique est un copolymère comprenant un acétate de vinyle stabilisé à pH bas, un ester vinylique d'un acide monocarboxylique saturé synthétique comprenant dix atomes de carbone et un copolymère d'acrylate.

14. Matériau de construction ou matériau de peinture comprenant la suspension aqueuse selon l'une quelconque des revendications précédentes.

15. Matériau de construction ou matériau de peinture selon la revendication 14, qui comprend en outre un agent d'activation, dans lequel l'agent d'activation comprend optionnellement un ou plusieurs des composants suivants :
| |
|---|
| Eau |
| Soude caustique |
| Potasse caustique |
| Hydroxyde de calcium |
| Clinker calciné |
| Carbonate de lithium |
| Sulfate de lithium |
| Silicate de lithium |
| Hydroxyde de lithium |

16. Procédé de revêtement d'une structure comprenant :
l'application de la suspension aqueuse selon l'une quelconque des revendications 1 à 13 ou du matériau de construction ou du matériau de peinture selon la revendication 14 ou la revendication 15 sur une surface d'une structure, le procédé comprenant optionnellement l'adjonction d'un agent d'activation à la suspension aqueuse avant l'application de la suspension aqueuse sur la surface, et en outre dans lequel, optionnellement, la suspension aqueuse est appliquée sur la surface d'une structure à une température ambiante de 5°C ou moins.
